# EUROPEAN PATENT APPLICATION

(11) **EP 4 748 751 A1**
(43) Date of publication of application: **27.05.2026**
(21) Application number: 24895487.7
(22) Date of filing: 27.05.2024
(51) Int. Cl.: B65G 15/20, B65G 15/22, B65G 15/58, H01M 10/04

(54) **CONVEYING DEVICE AND BATTERY ASSEMBLY SYSTEM**

(30) Priority: 30.11.2023 CN 202311641436
(71) Applicant: Contemporary Amperex Technology Co., Limited, Ningde, Fujian 352100 (CN)
(72) Inventor: WU, Kai, Ningde, Fujian 352100 (CN); ZHANG, Yongli, Ningde, Fujian 352100 (CN); TANG, Wenxiang, Ningde, Fujian 352100 (CN); AI, Hao, Ningde, Fujian 352100 (CN); PAN, Wensheng, Ningde, Fujian 352100 (CN); HUANG, Qinkun, Ningde, Fujian 352100 (CN)
(74) Representative: Ziebig Hengelhaupt Intellectual Property Attorneys Patentanwaltskanzlei PartGmbB
(86) International application number: PCT/CN2024/095560
(87) International publication number: WO 2025/112377

(57) **Abstract**

Provided are a transfer device and a battery assembly system. The transfer device includes two conveyor belts, at least one clamping fixture group, and an adjustment assembly. The two conveyor belts are disposed in parallel to and spaced apart from each other. Each clamping fixture group includes two clamping fixtures, the two clamping fixtures are disposed on corresponding ones of the two conveyor belts, respectively, and the two clamping fixtures cooperate with each other to clamp an article to be conveyed. The adjustment assembly is configured to adjust a spacing distance between the two clamping fixtures in response to a control signal. In the above manner, the adaptability of the transfer device to batteries of different models can be improved.

## Description

The present application claims priority to Chinese Patent Application No. 2023116414364, filed on November 30, 2023, and entitled "TRANSFER DEVICE AND BATTERY ASSEMBLY SYSTEM", which is incorporated herein by reference in its entirety.

### TECHNICAL FIELD

The present application relates to the technical field of mechanical devices, and in particular, to a transfer device and a battery assembly system.

### BACKGROUND

A transfer device is a common apparatus for conveying articles in daily life and engineering projects, which is also usually referred to as a conveyor or a conveying device.

However, the current transfer devices generally can only be configured to transport articles to be conveyed of a particular specification. Therefore, during transportation of articles of different specifications, a variety of articles to be conveyed of different specifications are required, which greatly increases the cost.

In addition, the above statements are only used to provide background information related to the present application and do not necessarily constitute the prior art.

### SUMMARY

In view of the above problem, the present application provides a transfer device and a battery assembly system, which can improve the adaptability of the transfer device to batteries of different models.

In a first aspect, an embodiment of the present application provides a transfer device. The transfer device includes two conveyor belts, at least two clamping fixtures, and an adjustment assembly. The two conveyor belts are disposed in parallel to and spaced apart from each other; the two clamping fixtures are disposed on the two conveyor belts, respectively, and the two clamping fixtures cooperate with each other to clamp an article to be conveyed; the adjustment assembly is capable of adjusting a spacing distance between the two clamping fixtures.

In the above manner, the adjustment assembly can adjust the relative positions of the two clamping fixtures, to enable the clamping fixtures to clamp articles to be conveyed of different models, thereby further enabling the adaptability of the transfer device to articles to be conveyed of different models.

In some embodiments, the two clamping fixtures are configured to clamp the article to be conveyed along a spacing direction of the two conveyor belts, the adjustment assembly includes a spacing adjustment assembly, and the spacing adjustment assembly is capable of adjusting a spacing distance between the two conveyor belts along the spacing direction, thereby adjusting the spacing distance between the two clamping fixtures along the spacing direction.

In the above manner, the spacing adjustment assembly can be configured to adjust the spacing distance between the two conveyor belts, thereby enabling the clamping fixtures to adapt to articles to be conveyed of different widths.

In some embodiments, the spacing adjustment assembly includes a first base, two first support frames, and a frame drive mechanism; the two first support frames are disposed on the first base, the two first support frames are configured to support corresponding ones of the two conveyor belts, respectively, and the frame drive mechanism is capable of driving at least one of the two first support frames to move, along the spacing direction, relative to the first base.

In the above manner, the frame drive mechanism can drive the first support frame, thereby driving the at least one of the two conveyor belts to move along the spacing direction so as to adjust the spacing between the two conveyor belts.

In some embodiments, the frame drive mechanism is configured to be capable of synchronously driving the two first support frames to move in opposite directions along the spacing direction.

In the above manner, the frame drive mechanism can simultaneously drive the two first support frames to move away from or toward each other along the spacing direction, thereby rapidly adjusting the spacing between the two conveyor belts.

In some embodiments, the first base is provided with a slide rail extending along the spacing direction, and the first support frame driven by the frame drive mechanism is slidably supported on the slide rail.

In the above manner, the resistance to the movement of the first support frame driven by the frame drive mechanism can be reduced.

In some embodiments, the transfer device includes an auxiliary support assembly, and the auxiliary support assembly includes a second base and two second support frames; the two second support frames are disposed on the second base, the two second support frames are configured to support corresponding ones of the two conveyor belts, respectively, and the second support frame is configured to be capable of moving, under a drive of the first support frame driven by the frame drive mechanism, relative to the second base.

In the above manner, by providing the auxiliary support assembly, the two conveyor belts are enabled to substantially keep parallel in the process of moving toward or away from each other.

In some embodiments, at least two auxiliary support assemblies are provided, the at least two auxiliary support assemblies are spaced apart from each other along the conveying direction of the two conveyor belts, and the spacing adjustment assembly is located between the two auxiliary support assemblies.

In the above manner, the pressure received by each auxiliary support assembly and the spacing adjustment assembly can be reduced, thereby enabling the spacing adjustment assembly to more easily drive the two conveyor belts to move toward or away from each other.

In some embodiments, the two clamping fixtures are configured to clamp the article to be conveyed along the conveying direction of the two conveyor belts, the adjustment assembly includes a drive assembly, and the drive assembly is capable of driving, in an asynchronous manner, the two conveyor belts to convey the two clamping fixtures along the conveying direction, thereby adjusting a spacing distance between the two clamping fixtures along the conveying direction.

In the above manner, the drive assembly can control the two conveyor belts to move asynchronously, thereby adjusting the spacing distance between the two clamping fixtures along the conveying direction.

In some embodiments, the drive assembly includes two transmission mechanisms, and the two transmission mechanisms drive the two conveyor belts to move along the conveying direction, respectively; the asynchronous manner includes sending a control signal to one of the two transmission mechanisms, to enable a conveyor belt corresponding to one of the two transmission mechanisms to move along the conveying direction, and a conveyor belt corresponding to the other of the two transmission mechanisms to remain stationary; or the control signal includes a first control signal and a second control signal, and the asynchronous manner includes sending the first control signal to one of the two transmission mechanisms and sending the first control signal to the other of the two transmission mechanisms, to enable the two conveyor belts to move in opposite directions and/or at different speeds along the conveying direction.

In the above manner, the two transmission mechanisms can drive the two conveyor belts to move asynchronously, thereby adjusting the spacing distance between the two clamping fixtures along the conveying direction.

In some embodiments, the drive assembly includes a transmission mechanism and a coupling mechanism, and one of the two conveyor belts is connected to the transmission mechanism via the coupling mechanism; the asynchronous manner includes disconnecting, by the coupling mechanism in response to the control signal, one of the two conveyor belts from the transmission mechanism, to enable one of the two conveyor belts to remain stationary, and one of the two conveyor belts to move, under a drive of the transmission mechanism, along the conveying direction; or the asynchronous manner includes switching, by the coupling mechanism in response to the control signal, to enable the two conveyor belts to move in opposite directions and/or at different speeds along the conveying direction.

In the above manner, by controlling the working state of the coupling mechanism, the two conveyor belts are enabled to move in opposite directions and/or at different speeds. In addition, the two conveyor belts are both driven by the same drive assembly, thereby facilitating the synchronous movement of the two conveyor belts in the case of conveying the article to be conveyed.

In some embodiments, the drive assembly is further configured to be capable of driving, in a synchronous manner, the two conveyor belts to convey the two clamping fixtures along the conveying direction, to enable the spacing distance between the two clamping fixtures along the conveying direction to remain unchanged.

In the above manner, the drive assembly can move synchronously to transport the article to be conveyed.

In some embodiments, the transfer device further includes a control system, and the control system is configured to generate a control signal based on a target spacing distance between the two clamping fixtures corresponding to the article to be conveyed and an actual spacing distance between the two clamping fixtures.

In the above manner, the transfer device can be configured to convey articles to be conveyed of different specifications.

In some embodiments, the transfer device further includes a human-machine interface, the human-machine interface is configured to allow a user to input or specify identification information of the article to be conveyed, and the control system retrieves the target spacing distance from a preset database according to the identification information of the article to be conveyed.

In the above manner, the user can conveniently input the identification information (for example, the model of the article to be conveyed) over the human-machine interface, and the control system can determine the target spacing distance that matches the article to be conveyed according to the identification information.

In another aspect, an embodiment of the present application provides a battery assembly system. The battery assembly system includes a conveying device and an assembly device; the conveying device is configured to convey structures to be assembled to stations of the assembly device, and conveying sections where the conveying device conveys the belt assembly structure to any one of the stations include the above transfer device.

In some embodiments, the battery includes a housing, a bottom cover, and an electrode assembly; the housing is provided with an open end, a wall of the housing opposite to the open end is provided with a post terminal, the post terminal is provided with a through hole, and the housing and the bottom cover are connected to form an accommodating cavity in communication with the through hole; an active substance-coated part of the electrode assembly is disposed in the housing, and a tab part of the electrode assembly passes through the through hole and is connected to a side of the post terminal facing away from the accommodating cavity; the stations of the assembly device include at least a tab welding apparatus, a housing insertion apparatus, a tab penetrating apparatus, a post terminal welding apparatus, and a bottom cover welding apparatus. The tab welding apparatus is configured to weld a plurality of tab plates of the electrode assembly to form a tab part; the housing insertion apparatus is configured to insert the electrode assembly into the housing from the open end; the tab penetrating apparatus is configured to clamp the tab part to pass the tab part through the through hole in the case that the electrode assembly is inserted into the housing; the post terminal welding apparatus is configured to weld the tab part passing through the through hole to the side of the post terminal facing away from the accommodating cavity; the bottom cover welding apparatus is configured to weld the bottom cover to the open end of the housing.

In some embodiments, a plurality of electrode assemblies are provided, and the stations of the assembly device further include a pairing apparatus located upstream of the tab welding apparatus, and the pairing apparatus is configured to stack the plurality of electrode assemblies.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a transfer device according to one or more embodiments;
FIG. 2 is a schematic structural diagram of a clamping fixture group according to one or more embodiments;
FIG. 3 is a schematic diagram illustrating the principle of adjusting the spacing distance L1 between two clamping fixtures along the spacing direction of two conveyor belts according to one or more embodiments;
FIG. 4 is a schematic diagram illustrating the principle of adjusting the spacing distance L2 between two clamping fixtures along the conveying direction of conveyor belts according to one or more embodiments;
FIG. 5 is a schematic structural diagram of a spacing adjustment assembly according to one or more embodiments;
FIG. 6 is a schematic diagram of a human-machine interface according to one or more embodiments; and
FIG. 7 is a schematic exploded structure diagram of a battery according to one or more embodiments.

Reference numerals in the detailed description are as follows:
10: transfer device; 100: conveyor belt; 120: clamping fixture group; 121: clamping fixture; 140: adjustment assembly; 141: spacing adjustment assembly; 1410: first base; 1412: first support frame; 1414: frame drive mechanism; 1416: slide rail; 145: drive assembly; 147: transmission mechanism; 150: auxiliary support assembly; 1500: second base; 1502: second support frame; 160: control system; 180: human-machine interface, L1: spacing distance between two clamping fixtures along the spacing direction; L2: spacing distance between two clamping fixtures along the conveying direction.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variants thereof in the specification and claims of the present application and the above description of the drawings are intended to cover a non-exclusive inclusion.

In the description of the embodiments of the present application, technical terms such as "first" and "second" are only used to distinguish different objects and should not be interpreted as indicating or implying the relative importance or implicitly indicating the number, specific order, or primary-secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technologies, batteries are being applied to an increasing number of fields, and are gradually replacing traditional fossil energy in the field of automotive power. The battery can store chemical energy and controllably convert the chemical energy to electric energy. For a recyclable battery, it can continue to be used by activating an active substance through charging after discharging.

At present, there is an increasing number of types of electronic devices that require the use of batteries. For example, the electronic devices may be a headset, a mobile phone, a computer, a wristband, a smartwatch, a smart eye, an automobile, an electric vehicle, or the like. However, the specifications of the batteries required to be used by these electronic devices are usually different. In addition, even for the same type of electronic devices (for example, automobiles), the specifications of the batteries required to be used may also be different. Therefore, manufacturers need to produce batteries of various specifications to meet different requirements, while in the process of producing batteries of different specifications, a transfer device is inevitably needed. If matching transfer devices are purchased or manufactured for batteries of different specifications, respectively, the manufacturing cost is greatly increased.

To enable the transfer device to be configured to transport batteries of different specifications and reduce the manufacturing cost, it is necessary to design a transfer device that supports type change. Optionally, the transfer device may include two conveyor belts, at least one clamping fixture group, and an adjustment assembly. The two conveyor belts are disposed in parallel to and spaced apart from each other. Each clamping fixture group includes two clamping fixtures. The two clamping fixtures are disposed on corresponding ones of the two conveyor belts, respectively. The two clamping fixtures cooperate with each other to clamp an article to be conveyed. The adjustment assembly is configured to adjust the spacing distance between the two clamping fixtures in response to a control signal.

Based on the above consideration, the present application provides a transfer device and a battery assembly system. In the above manner, the adjustment assembly can adjust the relative positions of the two clamping fixtures according to the control signal, to enable the clamping fixtures to clamp articles to be conveyed of different models, thereby further enabling the adaptability of the transfer device to articles to be conveyed of different models.

The battery disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like. The battery assembly system disclosed in the embodiments of the present application can be configured to assemble the above battery. The transfer device disclosed in the embodiments of the present application can be configured to convey a battery or a semi-finished battery in the battery assembly system.

The following describes an example structure of the transfer device involved in the embodiments of the present application. In addition, it should be noted that the following transfer device involved in the embodiments of the present application can be configured to convey a finished battery or a semi-finished battery, and can also be configured to convey other types of articles to be conveyed in other fields, such as a mobile phone, a tablet, a smart speaker, or a display.

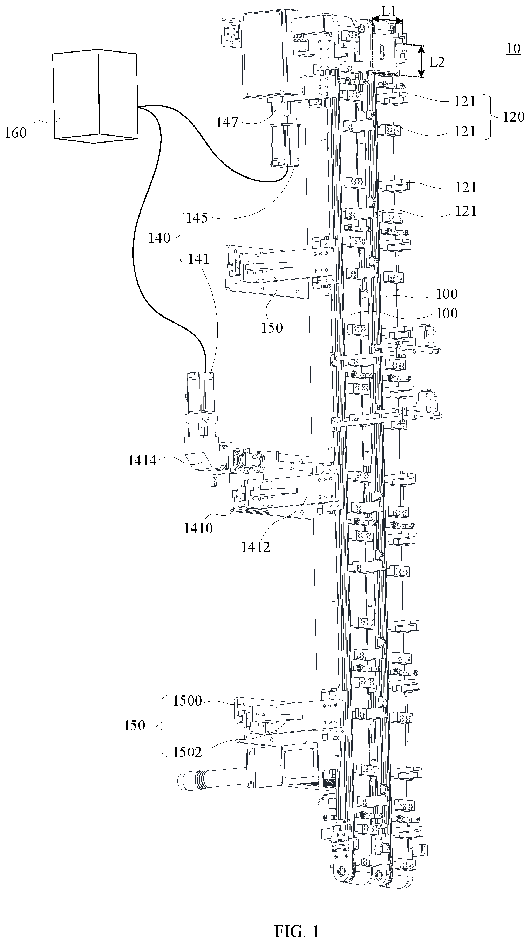

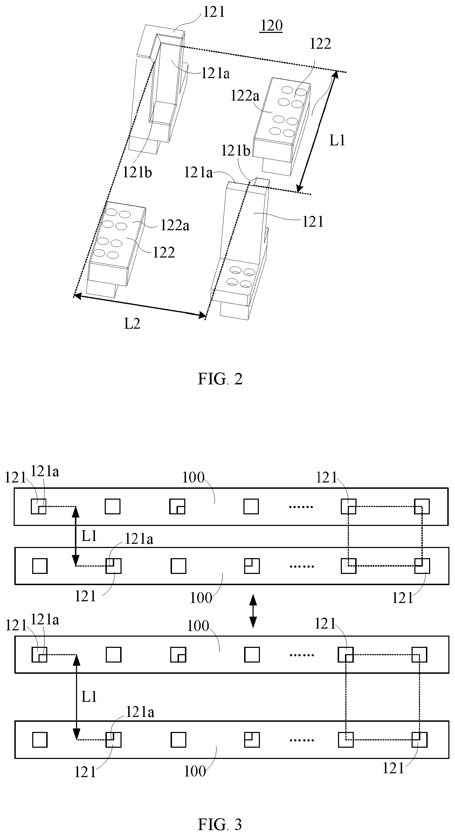

Referring to FIGs. 1 and 2, according to one or more embodiments of the present application, optionally, the transfer device 10 includes two conveyor belts 100, at least one clamping fixture group 120, and an adjustment assembly 140. The two conveyor belts 100 are disposed in parallel to and spaced apart from each other. Each clamping fixture group 120 includes two clamping fixtures 121, and the two clamping fixtures 121 are disposed on corresponding ones of the two conveyor belts 100, respectively. The two clamping fixtures 121 cooperate with each other to clamp an article to be conveyed. The adjustment assembly 140 can adjust the spacing distance between the two clamping fixtures 121.

The clamping fixture group 120 may include at least two clamping fixtures 121, and the spacing distance between the two clamping fixtures 121 is adjustable to adapt to articles to be conveyed of different specifications. The spacing distance may include a spacing distance L1 along the spacing direction of the two conveyor belts 100 and a spacing distance L2 along the conveying direction of the conveyor belts 100. In the case that the spacing distance L1 between the two clamping fixtures 121 along the spacing direction of the two conveyor belts 100 and the spacing distance L2 between the two clamping fixtures along the conveying direction of the conveyor belts 100 are matched with two of the length, width, and height of the article to be conveyed, the article to be conveyed can be securely clamped. Then, the two conveyor belts 100 are controlled to move synchronously, such that the article to be conveyed can be transferred.

The clamping fixture 121 may include a first limiting side 121a and a second limiting side 121b. The first limiting side 121a may be parallel to the conveying direction of the conveyor belt 100. The second limiting side 121b may be parallel to the spacing direction of the two conveyor belts 100. The spacing distance L1 between two clamping fixtures along the spacing direction of the two conveyor belts 100 may refer to the distance between the first limiting sides 121a of the two clamping fixtures 121. The spacing distance L2 between two clamping fixtures along the conveying direction of the conveyor belts 100 may refer to the distance between the second limiting sides 121b of the two clamping fixtures.

Optionally, the clamping fixture group 120 may further include two auxiliary clamping fixtures 122. The two auxiliary clamping fixtures 122 may be disposed on the two conveyor belts 100, respectively. In addition, the auxiliary clamping fixture 122 and the clamping fixture 121 disposed on the same conveyor belt 100 may be spaced apart from each other. The auxiliary clamping fixture 122 may be provided with a support surface 122a configured to support the article to be conveyed.

Referring to FIG. 3, the principle of adjusting, by the adjustment assembly 140, the spacing distance L1 between the two clamping fixtures 121 along the spacing direction of the two conveyor belts 100 may be: driving the two conveyor belts 100 to move toward or away from each other, thereby further driving the clamping fixtures 121 disposed on the conveyor belts 100 to move toward or away from each other, or may be: directly driving the two clamping fixtures 121 to move toward or away from each other relative to the conveyor belts 100 along the spacing direction of the conveyor belts 100.

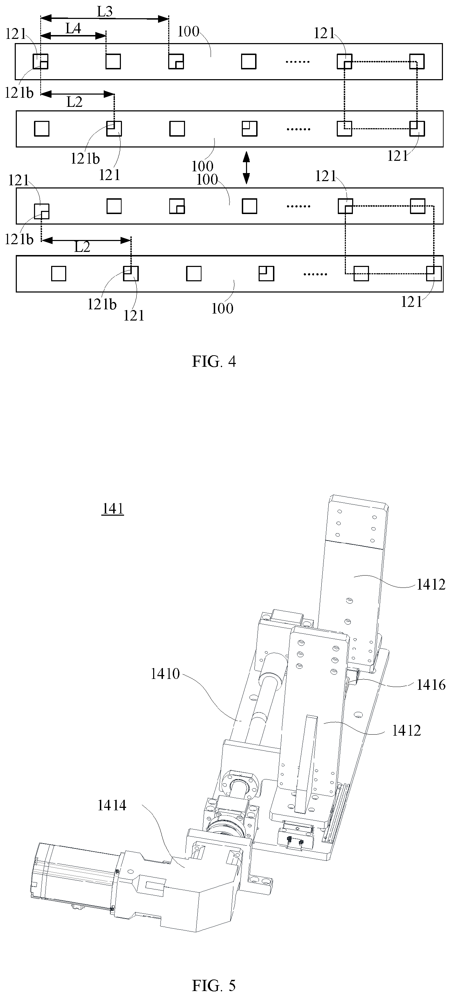

Referring to FIG. 4, the principle of adjusting, by the adjustment assembly 140, the spacing distance L2 between the two clamping fixtures 121 along the conveying direction of the conveyor belts 100 may be: driving the two conveyor belts 100 to rotate asynchronously, thereby enabling the clamping fixtures 121 disposed on the conveyor belts 100 to generate relative movement, or may be: directly driving the two clamping fixtures 121 to move relative to each other along the conveying direction of the conveyor belts 100.

As shown in the figure, the spacing distance L2 between the two clamping fixtures 121 along the conveying direction of the conveyor belts 100 is greater than 0 and less than the distance from the first limiting side 121a to the adjacent clamping fixture group 120. In consideration of the stability of the placement of the article to be conveyed, the article to be conveyed can be placed on the clamping fixture 121 and the auxiliary clamping fixture 122, that is, preferably, the spacing distance may be greater than the spacing distance L4 between the clamping fixture 121 and the auxiliary clamping fixture 122 in the clamping fixture group 120 and less than the spacing L3 between two adjacent clamping fixture groups 120.

In the above manner, the adjustment assembly 140 can adjust the relative positions of the two clamping fixtures 121, to enable the clamping fixtures 121 to clamp articles to be conveyed of different models, thereby further enabling the adaptability of the transfer device 10 to the articles to be conveyed of different models.

According to one or more embodiments of the present application, optionally, the two clamping fixtures 121 are configured to clamp the article to be conveyed along the spacing direction of the two conveyor belts 100.

The adjustment assembly 140 may include a spacing adjustment assembly 141. The spacing adjustment assembly 141 is capable of adjusting the spacing distance between the two conveyor belts 100 along the spacing direction, thereby adjusting the spacing distance L1 between the two clamping fixtures 121 along the spacing direction.

In the above manner, the spacing adjustment assembly 141 can be configured to adjust the spacing distance between the two conveyor belts 100, thereby enabling the clamping fixtures 121 to adapt to articles to be conveyed of different widths. In addition, in the case that the spacing adjustment assembly 141 is capable of simultaneously adjusting, by adjusting the spacing distance between the two conveyor belts 100, the spacing distance L1 between the clamping fixtures 121 of a plurality of clamping fixture groups 120 disposed on the conveyor belts 100 along the spacing direction, the spacing distance of the plurality of clamping fixture groups 120 can be rapidly adjusted.

Referring to FIG. 5, according to one or more embodiments of the present application, optionally, the spacing adjustment assembly 141 includes a first base 1410, two first support frames 1412, and a frame drive mechanism 1414. The two first support frames 1412 are disposed on the first base 1410. The two first support frames 1412 are configured to support corresponding ones of the two conveyor belts 100, respectively. The frame drive mechanism 1414 is capable of driving at least one of the two first support frames 1412 to move, along the spacing direction, relative to the first base 1410.

The frame drive mechanism 1414 may include a drive motor and a lead screw-nut mechanism. The drive motor may be provided with an output shaft to output rotational motion. The lead screw-nut mechanism may include a lead screw and a nut. The extending direction of the lead screw may be parallel to the spacing direction of the two conveyor belts 100. The nut is disposed on the lead screw, and the lead screw is connected to the output shaft. In the case that the output shaft rotates, the lead screw can be driven to rotate, and the nut can be driven to move linearly along the direction of the lead screw. One support frame 1412 may be connected to the nut to move, under the action of the nut, along the spacing direction of the two conveyor belts.

In the above manner, the frame drive mechanism 1414 can drive the first support frame 1412, thereby driving at least one of the two conveyor belts 100 to move along the spacing direction so as to adjust the spacing between the two conveyor belts 100. In the case that the spacing adjustment assembly 141 can drive, via the frame drive mechanism 1414, at least one first support frame 1412 to move along the spacing direction, the two conveyor belts 100 are further enabled to move toward or away from each other.

According to one or more embodiments of the present application, optionally, the frame drive mechanism 1414 is configured to be capable of synchronously driving the two first support frames 1412 to move in opposite directions along the spacing direction.

In the above manner, the frame drive mechanism 1414 can simultaneously drive the two first support frames 1412 to move away from or toward each other along the spacing direction, thereby rapidly adjusting the spacing between the two conveyor belts 100.

According to one or more embodiments of the present application, optionally, the first base 1410 is provided with a slide rail 1416 extending along the spacing direction, and the first support frame 1412 driven by the frame drive mechanism 1414 is slidably supported on the slide rail 1416.

The frame drive mechanism 1414 can drive the first support frame 1412 to slide along the slide rail 1416 and drive the conveyor belt 100 to move. In the above manner, the resistance to the movement of the first support frame 1412 driven by the frame drive mechanism 1414 can be reduced.

According to one or more embodiments of the present application, optionally, the transfer device 10 includes an auxiliary support assembly 150. The auxiliary support assembly 150 includes a second base 1500 and two second support frames 1502. The two second support frames 1502 are disposed on the second base 1500. The two second support frames 1502 are configured to support corresponding ones of the two conveyor belts 100, respectively. The second support frame 1502 is configured to be capable of moving, under the drive of the first support frame 1412 driven by the frame drive mechanism 1414, relative to the second base 1500.

The second base 1500 may be provided with a slide rail extending along the spacing direction. In the case that the frame drive mechanism 1414 drives, via the first support frame 1412, the two conveyor belts 100 to move relative to each other, since the second support frame 1502 is further provided with the conveyor belts 100, the second support frame 1502 can move synchronously, under the drive of the conveyor belts 100, relative to the second base 1500.

In the above manner, by providing the auxiliary support assembly 150, the two conveyor belts 100 are enabled to substantially keep parallel in the process of moving toward or away from each other.

According to one or more embodiments of the present application, optionally, at least two auxiliary support assemblies 150 are provided, the at least two auxiliary support assemblies 150 are spaced apart from each other along the conveying direction of the two conveyor belts 100, and the spacing adjustment assembly 141 is located between the two auxiliary support assemblies 150.

In the above manner, the pressure received by each auxiliary support assembly 150 and the spacing adjustment assembly 141 can be reduced, thereby enabling the spacing adjustment assembly 141 to more easily drive the two conveyor belts 100 to move toward or away from each other.

According to one or more embodiments of the present application, optionally, the two clamping fixtures 121 are configured to clamp the article to be conveyed along the conveying direction of the two conveyor belts 100.

The adjustment assembly 140 includes a drive assembly 145. The drive assembly 145 is capable of driving, in an asynchronous manner, the two conveyor belts 100 to convey the two clamping fixtures 121 along the conveying direction, thereby adjusting the spacing distance L2 between the two clamping fixtures 121 along the conveying direction.

The driving of the two conveyor belts 100 by the drive assembly 145 in an asynchronous manner may mean that the drive assembly 145 drives the two conveyor belts 100 to move in a non-synchronous manner. For example, the drive assembly 145 may drive the two conveyor belts 100 to move in opposite directions, or the drive assembly 145 may drive the two conveyor belts 100 to move at different speeds.

In the above manner, the drive assembly 145 can control the two conveyor belts 100 to move asynchronously, thereby adjusting the spacing distance L2 between the two clamping fixtures 121 along the conveying direction. In addition, by controlling the two conveyor belts 100 to move asynchronously, a plurality of clamping fixture groups 120 on the conveyor belts 100 can be adjusted simultaneously.

According to one or more embodiments of the present application, optionally, the drive assembly 145 includes two transmission mechanisms 147. The two transmission mechanisms 147 drive the two conveyor belts 100 to move along the conveying direction, respectively.

Optionally, the asynchronous manner includes sending a control signal to one of the two transmission mechanisms 147, to enable the conveyor belt 100 corresponding to one of the two transmission mechanisms 147 to move along the conveying direction, and the conveyor belt 100 corresponding to the other of the two transmission mechanisms 147 to remain stationary.

The control signal may be a control signal sent by a processor or an upper computer, and may be specifically a control signal that is output by the processor or the upper computer according to identification information and matched with the identification information. The identification information can be configured to characterize the dimension information (such as length, width, or height) or model information of the article to be conveyed, which may be input by a user over the human-machine interface 180 or may be identified by an image processing assembly.

Optionally, the control signal may also include a first control signal and a second control signal. The asynchronous manner includes sending the first control signal to one of the two transmission mechanisms 147 and sending the first control signal to the other of the two transmission mechanisms 147, to enable the two conveyor belts 100 to move in opposite directions and/or at different speeds along the conveying direction.

In the above manner, the two transmission mechanisms 147 can drive the two conveyor belts 100 to move asynchronously, thereby adjusting the spacing distance L2 between the two clamping fixtures 121 along the conveying direction.

According to one or more embodiments of the present application, optionally, the drive assembly 145 includes a transmission mechanism 147 and a coupling mechanism. One of the two conveyor belts 100 is connected to the transmission mechanism 147 via the coupling mechanism.

Optionally, the asynchronous manner includes disconnecting, by the coupling mechanism in response to the control signal, one of the two conveyor belts 100 from the transmission mechanism 147, to enable one of the two conveyor belts 100 to remain stationary, and one of the two conveyor belts 100 to move, under the drive of the transmission mechanism 147, along the conveying direction.

The coupling mechanism may be specifically a clutch. In the case that the coupling mechanism does not receive the control signal, the transmission mechanism 147 can directly control one of the two conveyor belts 100 to move, and control the other, via the coupling mechanism, to move synchronously. After the coupling mechanism receives the control signal, the coupling mechanism cuts off the power connection between the other of the two conveyor belts 100 and the transmission mechanism 147, to enable the conveyor belt 100 directly driven by the transmission mechanism 147 to move, and the conveyor belt 100 indirectly driven by the coupling mechanism to remain stationary.

Optionally, the asynchronous manner includes switching, by the coupling mechanism in response to the control signal, to enable the two conveyor belts 100 to move in opposite directions and/or at different speeds along the conveying direction.

The coupling mechanism may be specifically a speed variator. In the case that the coupling mechanism does not receive the control signal, the transmission mechanism 147 can directly control one of the two conveyor belts 100 to move, and control the other, via the coupling mechanism, to move synchronously. In the case that the coupling mechanism receives the control signal, the coupling mechanism works in a speed variation mode, such that the conveyor belt 100 directly driven by the transmission mechanism 147 and the conveyor belt 100 indirectly driven by the transmission mechanism 147 via the coupling mechanism can move in opposite directions and/or at different speeds.

In the above manner, by controlling the working state of the coupling mechanism, the two conveyor belts 100 are enabled to move in opposite directions and/or at different speeds. In addition, the two conveyor belts 100 are both driven by the same drive assembly 145, thereby facilitating the synchronous movement of the two conveyor belts 100 in the case of conveying the article to be conveyed.

According to one or more embodiments of the present application, optionally, the drive assembly 145 is further configured to be capable of driving, in a synchronous manner, the two conveyor belts 100 to convey the two clamping fixtures 121 along the conveying direction, to enable the spacing distance L2 between the two clamping fixtures 121 along the conveying direction to remain unchanged.

In the above manner, the drive assembly 145 can move synchronously to transport the article to be conveyed. In the case that a type change (the change of type or specification of the article to be conveyed) is required, generally, there are no previous articles to be conveyed or articles ready to be conveyed on the transfer device 10. In this case, the conveyor belts 100 are controlled by the drive assembly 145 to move in an asynchronous manner, thereby achieving the type change. After the completion of the type change, the conveyor belts can move in a synchronous manner.

According to one or more embodiments of the present application, optionally, the transfer device 10 further includes a control system 160. The control system 160 is configured to generate a control signal based on a target spacing distance between the two clamping fixtures 121 corresponding to the article to be conveyed and an actual spacing distance between the two clamping fixtures 121.

The actual spacing distance between the two clamping fixtures 121 may refer to the spacing distance between the two clamping fixtures 121 before the type change. The actual spacing distance may include an actual distance along the spacing direction of the two conveyor belts 100 and an actual distance along the conveying direction of the conveyor belts 100. The target spacing distance between the two clamping fixtures 121 may refer to a desired spacing distance between the two clamping fixtures 121 after the completion of the type change. The target spacing distance may include a target distance along the spacing direction of the two conveyor belts 100 and a target distance along the conveying direction of the conveyor belts 100.

The principle of generating the control signal based on the target spacing distance between the two clamping fixtures 121 and the actual spacing distance between the two clamping fixtures 121 may be: acquiring an actual distance and a target distance between the two clamping fixtures 121 along the spacing direction of the two conveyor belts 100, and calculating a first difference between the actual distance and the target distance between the two clamping fixtures 121 along the spacing direction of the two conveyor belts 100; and acquiring an actual distance and a target distance between the two clamping fixtures 121 along the conveying direction of the conveyor belts 100, calculating a second difference between the actual distance and the target distance between the two clamping fixtures 121 along the conveying direction of the conveyor belts 100, and generating the control signal based on the first difference and the second difference.

The adjustment assembly 140, after being in response to the control signal, can control the spacing adjustment assembly 141 to drive the two conveyor belts 100 to move relative to each other by a first distance along the spacing direction. The first distance is related to the first difference. The first distance may be equal to the first difference, or may be slightly greater than the first difference.

The adjustment assembly 140, after being in response to the control signal, can control the drive assembly 145 to drive the two conveyor belts 100 to move, in an asynchronous manner, relative to each other by a second distance along the conveying direction. The second distance may be related to the second difference. The second distance may be equal to the second difference, or may be slightly greater than the second difference.

In the above manner, the transfer device 10 can be configured to convey articles to be conveyed of different specifications.

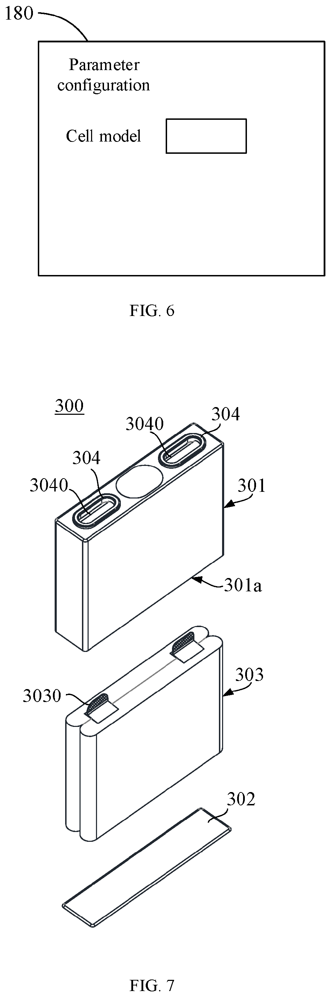

Referring to FIG. 6, according to one or more embodiments of the present application, optionally, the transfer device 10 further includes a human-machine interface 180. The human-machine interface 180 is configured to allow a user to input or specify the identification information of the article to be conveyed, and the control system 160 retrieves the target spacing distance from a preset database according to the identification information of the article to be conveyed.

The identification signal may be the model of the article to be conveyed. The target spacing distance in the preset database may be related to the specification and dimension of the article to be conveyed of this model. The specification and dimension may include at least one of a length, a width, and a height.

The human-machine interface may refer to an interface of an input/output device that establishes communication and exchanges information between a person and the device. The input/output device may include at least one of a keyboard, a display, a mouse, and a touchscreen.

In the above manner, the user can conveniently input the identification information (for example, the model of the article to be conveyed) over the human-machine interface 180, and the control system 160 can determine the target spacing distance that matches the article to be conveyed according to the identification information.

According to one or more embodiments of the present application, the battery assembly system may include a conveying device and an assembly device. The conveying device is configured to convey structures to be assembled to the stations of the assembly device, and the conveying sections where the conveying device conveys the belt assembly structure to any one of the stations include the above transfer device.

In some embodiments, referring to FIG. 7, the battery 300 includes a housing 301, a bottom cover 302, and an electrode assembly 303. The housing 303 is provided with an open end 303a, the wall of the housing 301 opposite to the open end 303a is provided with a post terminal 304, the post terminal 304 is provided with a through hole 3040, and the housing 301 and the bottom cover 302 are connected to form an accommodating cavity in communication with the through hole 3040. An active substance-coated part of the electrode assembly 303 is disposed in the housing 301, and a tab part 3030 of the electrode assembly 303 passes through the through hole 3040 and is connected to the side of the post terminal 304 facing away from the accommodating cavity.

According to one or more embodiments of the present application, the stations of the assembly device include at least a tab welding apparatus, a housing insertion apparatus, a tab penetrating apparatus, a post terminal welding apparatus, and a bottom cover welding apparatus. The tab welding apparatus is configured to weld a plurality of tab plates of the electrode assembly to form a tab part; the housing insertion apparatus is configured to insert the electrode assembly into the housing from the open end; the tab penetrating apparatus is configured to clamp the tab part to pass the tab part through the through hole in the case that the electrode assembly is inserted into the housing; the post terminal welding apparatus is configured to weld the tab part passing through the through hole to the side of the post terminal facing away from the accommodating cavity; the bottom cover welding apparatus is configured to weld the bottom cover to the open end of the housing.

In some embodiments, a plurality of electrode assemblies are provided, and the stations of the assembly device further include a pairing apparatus located upstream of the tab welding apparatus, and the pairing apparatus is configured to stack the plurality of electrode assemblies.

It should be noted that in this embodiment, the conveying device includes a conveying line. The conveying line may be a conveying structure formed by motor-driven conveying rollers in cooperation with a conveyor belt, or may be a conveying structure formed by motor-driven articulated conveying chain links, or may be an AGV conveying trolley, as long as the conveying line can achieve conveyance in at least one direction and support the stability of the structures to be assembled.

The tab welding apparatus is intended to pre-weld the tab plates to form the tab part. The tab welding apparatus is optionally an ultrasonic welding device, as long as the tab welding apparatus can ensure that the tabs are welded in a stable clamped state. The housing insertion apparatus is a pushing mechanism or a clamping mechanism, as long as the housing insertion apparatus can stably move the electrode assembly toward the open end of the housing and allow the electrode assembly to enter the accommodating cavity through the open end. Similarly, the tab penetrating apparatus may adopt a clamping structure or a guiding structure, as long as the tab penetrating apparatus can guide the tab part to smoothly pass through the through hole without interfering with the housing. The post terminal welding apparatus is intended to weld the tab part and the post terminal, and is optionally a laser welding device. The bottom cover welding apparatus is intended to weld the circumferential edges of the bottom cover and the open end of the housing, and is also a laser welding device.

In addition, the assembly device includes, but is not limited to, the tab welding apparatus, the housing insertion apparatus, the tab penetrating apparatus, the post terminal welding apparatus, and the bottom cover welding apparatus. Illustratively, in the case that a plurality of electrode assemblies are provided, for example, two electrode assemblies are provided, the assembly device further includes a pairing apparatus. The pairing apparatus is configured to stack the plurality of electrode assemblies, such that the tab plates of the two electrode assemblies are substantially opposite to each other. This facilitates the conveyance of the paired electrode assemblies, by the conveying structure, to the tab welding apparatus for welding the tab plates, thereby facilitating the formation of the tab part. Further illustratively, to ensure the reliability of the assembly process of the battery, dust removal and NG detection stations may be further added between any two adjacent stations. This is not limited in this embodiment.

According to one or more embodiments of the present application, a battery assembly system is provided. The battery assembly system may include a transfer device 10. The transfer device 10 may include two conveyor belts 100, at least one clamping fixture group 120, an adjustment assembly 140, a control system 160, and a human-machine interface 180. The two conveyor belts 100 are disposed in parallel to and spaced apart from each other. Each clamping fixture group 120 includes two clamping fixtures 121, and the two clamping fixtures 121 are disposed on corresponding ones of the two conveyor belts 100, respectively. The two clamping fixtures 121 cooperate with each other to clamp an article to be conveyed. The adjustment assembly 140 is configured to adjust the spacing distance between the two clamping fixtures 121 in response to a control signal. The two clamping fixtures 121 are configured to clamp an article to be conveyed along the spacing direction and the conveying direction of the two conveyor belts 100. The adjustment assembly 140 includes a spacing adjustment assembly 141 for adjusting the spacing distance L1 between the two clamping fixtures 121 along the spacing direction and a drive assembly 145 for adjusting the spacing distance along the conveying direction. The control system 160 is configured to generate a control signal based on a target spacing distance between the two clamping fixtures 121 corresponding to the article to be conveyed and an actual spacing distance between the two clamping fixtures 121. The human-machine interface 180 is configured to allow a user to input or specify the identification information of the article to be conveyed, and the control system 160 retrieves the target spacing distance from a preset database according to the identification information of the article to be conveyed.

The spacing adjustment assembly 141, in response to the control signal, adjusts the spacing distance between the two conveyor belts 100 along the spacing direction, thereby adjusting the spacing distance L1 between the two clamping fixtures 121 along the spacing direction. The spacing adjustment assembly 141 includes a first base 1410, two first support frames 1412, and a frame drive mechanism 1414. The two first support frames 1412 are disposed on the first base 1410. The two first support frames 1412 are configured to support corresponding ones of the two conveyor belts 100, respectively. The frame drive mechanism 1414 is configured to be capable of driving, in response to the control signal, at least one of the two first support frames 1412 to move, along the spacing direction, relative to the first base 1410. The frame drive mechanism 1414 is configured to be capable of synchronously driving the two first support frames 1412 to move in opposite directions along the spacing direction. The first base 1410 is provided with a slide rail 1416 extending along the spacing direction, and the first support frame 1412 driven by the frame drive mechanism 1414 is slidably supported on the slide rail 1416. The transfer device 10 includes an auxiliary support assembly 150. The auxiliary support assembly 150 includes a second base 1500 and two second support frames 1502. The two second support frames 1502 are disposed on the second base 1500. The two second support frames 1502 are configured to support corresponding ones of the two conveyor belts 100, respectively. The second support frame 1502 is configured to be capable of moving, under the drive of the first support frame 1412 driven by the frame drive mechanism 1414, relative to the second base 1500. At least two auxiliary support assemblies 150 are provided. The at least two auxiliary support assemblies 150 are spaced apart from each other along the conveying direction of the two conveyor belts 100, and the spacing adjustment assembly 141 is located between the two auxiliary support assemblies 150.

The drive assembly 145 is configured to drive, in response to the control signal, the two conveyor belts 100 in an asynchronous manner to convey the two clamping fixtures 121 along the conveying direction, thereby adjusting the spacing distance L2 between the two clamping fixtures 121 along the conveying direction. The drive assembly 145 includes two transmission mechanisms 147, and the two transmission mechanisms 147 drive the two conveyor belts 100 to move along the conveying direction, respectively. The asynchronous manner includes sending the control signal to one of the two transmission mechanisms 147, to enable the conveyor belt 100 corresponding to one of the two transmission mechanisms 147 to move along the conveying direction, and the conveyor belt 100 corresponding to the other of the two transmission mechanisms 147 to remain stationary; or the control signal includes a first control signal and a second control signal, and the asynchronous manner includes sending the first control signal to one of the two transmission mechanisms 147 and sending the first control signal to the other of the two transmission mechanisms 147, to enable the two conveyor belts 100 to move in opposite directions and/or at different speeds along the conveying direction. The drive assembly 145 includes a transmission mechanism 147 and a coupling mechanism, and one of the two conveyor belts 100 is connected to the transmission mechanism 147 via the coupling mechanism. The asynchronous manner includes disconnecting, by the coupling mechanism in response to a control signal, one of the two conveyor belts 100 from the transmission mechanism 147, to enable one of the two conveyor belts 100 to remain stationary, and one of the two conveyor belts 100 to move, under the drive of the transmission mechanism 147, along the conveying direction; or the asynchronous manner includes switching, by the coupling mechanism in response to the control signal, to enable the two conveyor belts 100 to move in opposite directions and/or at different speeds along the conveying direction. The drive assembly 145 is further configured to be capable of driving, in a synchronous manner, the two conveyor belts 100 to convey the two clamping fixtures 121 along the conveying direction, to enable the spacing distance L2 between the two clamping fixtures 121 along the conveying direction to remain unchanged.

In this case, when the transfer device 10 is required to convey a battery of a new specification (which may also be other articles to be conveyed), the user can input or specify the model of the battery (which may also be other identification information) over the human-machine interface 180. Then, the control system 160 can retrieve the target spacing distance from the preset database according to the model of the battery, and generate a control signal in combination with the current actual spacing distance between the two clamping fixtures 121, such that the adjustment assembly 140 can adjust the spacing distance between the two clamping fixtures 121 from the previous actual spacing distance to an expected target spacing distance.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A transfer device, wherein the transfer device comprises:
two conveyor belts, the two conveyor belts being disposed in parallel to and spaced apart from each other;
at least two clamping fixtures, the two clamping fixtures being disposed on the two conveyor belts, respectively, and the two clamping fixtures cooperating with each other to clamp an article to be conveyed; and
an adjustment assembly, capable of adjusting a spacing distance between the two clamping fixtures.

2. The transfer device according to claim 1, wherein the two clamping fixtures are configured to clamp the article to be conveyed along a spacing direction of the two conveyor belts, the adjustment assembly comprises a spacing adjustment assembly, and the spacing adjustment assembly is capable of adjusting a spacing distance between the two conveyor belts along the spacing direction, thereby adjusting the spacing distance between the two clamping fixtures along the spacing direction.

3. The transfer device according to claim 2, wherein the spacing adjustment assembly comprises a first base, two first support frames, and a frame drive mechanism; the two first support frames are disposed on the first base, the two first support frames are configured to support the two conveyor belts, respectively, and the frame drive mechanism is capable of driving at least one of the two first support frames to move, along the spacing direction, relative to the first base.

4. The transfer device according to claim 3, wherein the frame drive mechanism is configured to be capable of synchronously driving the two first support frames to move in opposite directions along the spacing direction.

5. The transfer device according to claim 3 or 4, wherein the first base is provided with a slide rail extending along the spacing direction, and the first support frame driven by the frame drive mechanism is slidably supported on the slide rail.

6. The transfer device according to any one of claims 3 to 5, wherein the transfer device comprises an auxiliary support assembly, and the auxiliary support assembly comprises a second base and two second support frames; the two second support frames are disposed on the second base, the two second support frames are configured to support corresponding ones of the two conveyor belts, respectively, and the second support frame is configured to be capable of moving, under a drive of the first support frame driven by the frame drive mechanism, relative to the second base.

7. The transfer device according to claim 6, wherein at least two auxiliary support assemblies are provided, the at least two auxiliary support assemblies are spaced apart from each other along a conveying direction of the two conveyor belts, and the spacing adjustment assembly is located between the two auxiliary support assemblies.

8. The transfer device according to any one of claims 1 to 7, wherein the two clamping fixtures are configured to clamp the article to be conveyed along the conveying direction of the two conveyor belts, the adjustment assembly comprises a drive assembly, and the drive assembly is capable of driving, in an asynchronous manner, the two conveyor belts to convey the two clamping fixtures along the conveying direction, thereby adjusting a spacing distance between the two clamping fixtures along the conveying direction.

9. The transfer device according to claim 8, wherein the drive assembly comprises two transmission mechanisms, and the two transmission mechanisms drive the two conveyor belts to move along the conveying direction, respectively;
the asynchronous manner comprises sending a control signal to one of the two transmission mechanisms, to enable a conveyor belt corresponding to one of the two transmission mechanisms to move along the conveying direction, and a conveyor belt corresponding to the other of the two transmission mechanisms to remain stationary; or
the control signal comprises a first control signal and a second control signal, and the asynchronous manner comprises sending the first control signal to one of the two transmission mechanisms and sending the first control signal to the other of the two transmission mechanisms, to enable the two conveyor belts to move in opposite directions and/or at different speeds along the conveying direction.

10. The transfer device according to claim 9, wherein the drive assembly comprises a transmission mechanism and a coupling mechanism, and one of the two conveyor belts is connected to the transmission mechanism via the coupling mechanism;
the asynchronous manner comprises disconnecting, by the coupling mechanism in response to the control signal, one of the two conveyor belts from the transmission mechanism, to enable one of the two conveyor belts to remain stationary, and one of the two conveyor belts to move, under a drive of the transmission mechanism, along the conveying direction; or
the asynchronous manner comprises switching, by the coupling mechanism in response to the control signal, to enable the two conveyor belts to move in opposite directions and/or at different speeds along the conveying direction.

11. The transfer device according to any one of claims 8 to 10, wherein the drive assembly is further configured to be capable of driving, in a synchronous manner, the two conveyor belts to convey the two clamping fixtures along the conveying direction, to enable the spacing distance between the two clamping fixtures along the conveying direction to remain unchanged.

12. The transfer device according to any one of claims 1 to 11, wherein the transfer device further comprises a control system, and the control system is configured to generate a control signal based on a target spacing distance between the two clamping fixtures corresponding to the article to be conveyed and an actual spacing distance between the two clamping fixtures.

13. The transfer device according to claim 12, wherein the transfer device further comprises a human-machine interface, the human-machine interface is configured to allow a user to input or specify identification information of the article to be conveyed, and the control system retrieves the target spacing distance from a preset database according to the identification information of the article to be conveyed.

14. A battery assembly system, comprising a conveying device and an assembly device; the conveying device is configured to convey structures to be assembled to stations of the assembly device, and conveying sections where the conveying device conveys the belt assembly structure to any one of the stations comprise the transfer device according to any one of claims 1 to 13.

15. The battery assembly system according to claim 14, wherein the battery comprises a housing, a bottom cover, and an electrode assembly; the housing is provided with an open end, a wall of the housing opposite to the open end is provided with a post terminal, the post terminal is provided with a through hole, and the housing and the bottom cover are connected to form an accommodating cavity in communication with the through hole; an active substance-coated part of the electrode assembly is disposed in the housing, and a tab part of the electrode assembly passes through the through hole and is connected to a side of the post terminal facing away from the accommodating cavity; the stations of the assembly device comprise at least a tab welding apparatus, a housing insertion apparatus, a tab penetrating apparatus, a post terminal welding apparatus, and a bottom cover welding apparatus,
wherein the tab welding apparatus is configured to weld a plurality of tab plates of the electrode assembly to form a tab part; the housing insertion apparatus is configured to insert the electrode assembly into the housing from the open end; the tab penetrating apparatus is configured to clamp the tab part to pass the tab part through the through hole in a case that the electrode assembly is inserted into the housing; the post terminal welding apparatus is configured to weld the tab part passing through the through hole to the side of the post terminal facing away from the accommodating cavity; the bottom cover welding apparatus is configured to weld the bottom cover to the open end of the housing.

16. The battery assembly system according to claim 15, wherein a plurality of electrode assemblies are provided, and the stations of the assembly device further comprise a pairing apparatus located upstream of the tab welding apparatus, and the pairing apparatus is configured to stack the plurality of electrode assemblies.
